(19) Europäisches Patentamt
European Patent Office
Office européen des brevets

(11) EP 2 204 249 A1

(12) EUROPEAN PATENT APPLICATION

(43) Date of publication:
**07.07.2010 Bulletin 2010/27**

(51) Int Cl.:
***B22F 1/00*** (2006.01) ***B22F 9/00*** (2006.01)

(21) Application number: **08171747.2**

(22) Date of filing: **16.12.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Akzo Nobel Coatings International B.V.**
**6824 BM Arnhem (NL)**

(72) Inventors:
- **Buscall, Richard**
  **Exeter (GB)**
- **Graham, Derek A.**
  **Guisborough, Cleveland TS14 7BZ (GB)**
- **Anderson, Rory**
  **West Brunswick, Victoria 3055 (AU)**
- **Scales, Peter Joseph**
  **Research 3095**
  **Victoria (AU)**
- **Mulvaney, Paul**
  **Alphington 3078**
  **Victoria (AU)**
- **Eldridge, Robert James**
  **Glen Waverley 3150**
  **Victoria (AU)**

(74) Representative: **Schalkwijk, Pieter Cornelis**
**Akzo Nobel N.V.**
**Legal & IP**
**P.O. Box 9300**
**6800 SB Arnhem (NL)**

# (54) Aqueous dispersions of metallic particles

(57) A method of preparing an aqueous dispersion comprising metal particles of mean diameter from 0.5 -25 nm by weight and an aqueous carrier liquid, including the steps of
i) providing a mixture comprising at least one metal salt, aqueous carrier liquid and a stabilizer for the particles
ii) contacting the mixture with a reducing agent to form a reaction mixture
iii) causing the at least one metal salt to react with the reducing agent to form a dispersion comprising metal particles and acid

wherein step iii) is partly or completely performed in the presence of anion exchange resin whereby the acid is exchanged for a hydroxide ion from the resin and/or is sorbed by the resin.

EP 2 204 249 A1

## Description

This application relates to a method of making aqueous dispersions of metal particles, especially having mean diameters less than 25 nm, the dispersions themselves, compositions comprising the dispersions, in particular inks and printed circuits derived from the inks.

Aqueous dispersions of small metallic particles, especially silver, are attracting increasing interest due to their potential industrial applications such as antimicrobial activity, catalysis, optical waveguides, radio frequency identification antennae, photovoltaic grids for generating electricity from solar energy, electrodes for thin film transistors and printed electrical circuits in general.

Printed electrical circuits are usually etched onto circuit boards. The boards themselves comprise a layer of conducting metal, usually copper foil, on a stiff supporting substrate. Electrically conducting circuits are produced by selectively etching away some of the conducting metal with acid to leave the electrical copper circuit. The circuit board is then populated with suitable electrical components to produce an electrical device or electrical component part.

Not only is the circuit board rigid, bulky and expensive, but the etching process is dirty and dangerous. Thus there is a need to provide electrically conducting circuits that are compact, flexible, cheap and can be manufactured by a safe and inexpensive process.

One way of doing this is to print the circuit directly onto a substrate, which can be a flexible substrate such as a polymer film, using electrically conducting ink comprising metallic particles. However, in order to produce an efficient electrically conducting pathway the individual metal particles of the ink must form a sufficiently continuous metal film.

Of course, the melting point of most metals is many hundreds, if not thousands of degrees Celsius, significantly higher than the glass transition temperature (Tg) of polymers. Indeed, at such high temperatures most polymers, that can be used as flexible substrates, degrade or decompose.

However, the temperature at which small particles of a metal sinter together can be much lower than the melting temperature of the bulk metal. For example, whilst bulk silver melts at 962°C, particles of silver of mean diameter about 50 nm sinter together at about 200°C and those of 5 to 25 nm diameter sinter at about 120°C. At these lower temperatures many cheap and readily available plastic films survive.

Known processes for producing metal particles use high levels of organic solvents and/or produce particles in very low concentration. International patent publication WO 2007/120756 describes one such process using two incompatible solvents which phase separate on mixing. The process disclosed produces metal or metal oxide particles, of 5 to 10 nm diameter stabilised using a low molecular weight stabiliser. Approximately 300 to 800g of organic solvents are required for each gram of metal or metal oxide particles produced. The removal of such large amounts of organic solvent is inconvenient, expensive and environmentally unfriendly. European patent application EP 1646095 also uses incompatible solvents to form precipitated metal particles of diameter from 10 to 100 nm stabilised with thermally removable, low molecular weight stabilisers. This process requires even more organic solvent, about 2400g, for each gram of metal particles produced.

However, whilst EP 1646095 claims that the process it discloses works in the presence of water, there is no enabling disclosure of a process for producing the particles in aqueous media. Furthermore, we have now discovered a significant problem not recognised therein; namely that the reduction of the metal salt to form metal particles is very slow in water.

Thus a simple and more environmentally acceptable process for producing such metal particles either in aqueous dispersion at high concentration or as dried powders is very desirable.

We have now devised a method for preparing metal particles in aqueous carrier liquid and which is simple, uses little or no organic liquid and proceeds at an acceptable, sustainable rate and provides stable dispersions at higher solids than previously. Furthermore, the dispersions produced are substantially free of inorganic acid.

According to the present invention there is provided a method of preparing an aqueous dispersion comprising metal particles of mean diameter from 0.5 -25 nm by weight and an aqueous carrier liquid, including the steps of

i) providing a mixture comprising at least one metal salt, aqueous carrier liquid and a stabilizer for the particles
ii) contacting the mixture with a reducing agent to form a reaction mixture
iii) causing the at least one metal salt to react with the reducing agent and form metal particles and acid

wherein step iii) is partly or completely performed in the presence of anion exchange resin whereby the acid is exchanged for a hydroxide ion from the resin and/or is sorbed by the resin.

The use of the anion exchange resin is an efficient and convenient way to remove the acid from the reaction mixture formed by the reduction of the metal salt.

Surprisingly, we find that the removal of the acid allows the reaction to proceed at an enhanced rate. In addition because the resin is in the form of millimeter sized beads, it is easily separated from the reaction mixture, particularly from the much smaller metal particles, once the reaction is complete, by simple filtration or alternatively by passing the

reaction mixture through a fixed bed of resin.

The use of the ion exchange resin has the further advantage that the aqueous dispersion is free of the acid generated from the reduction of the metal salt and/or the salt produced by neutralization of said acid with base. Thus, further washing and/or purification is largely unnecessary. This is advantageous when using the dispersion as a basis for formulating certain products, for example antimicrobial preparations and catalysts.

When separated, the anion exchange resin can be regenerated by treatment with a suitable base and re-used.

Anion exchange resins usually comprise high molecular weight ionic polymers, typically in the form of porous beads. The ionic groups incorporated into the polymer are positively charged and form part of the polymer network. Associated with these groups are negatively charged counter-ions, for example hydroxide ions. The hydroxide ions are mobile and can be exchanged for other similarly charged ions present in a surrounding medium. Thus, in the present invention, the dissociated anions generated by acid formed by the reduction of the metal salt, and other adventitious acidic moieties, can be exchanged for hydroxide ions. It is important that the counter-ions are hydroxide ions as, when exchanged with the anion of the salt, the hydroxide ions form water in the reaction mixture. Water, of course does not need to be removed from the dispersion and keeps the process simple.

Suitable ionic groups attached to the polymer are strong or weak bases.

Strong bases are those that are largely dissociated, in much the same way that sodium hydroxide is. For example, one family of such strong bases is tri-alkyl ammonium hydroxide:

$$-N(R)_3\ OH \rightarrow N(R)_3^+ + OH^-$$

and where the equilibrium is to the right, favouring dissociation.

Resins containing such groups are known as strong base anion exchange resins.

Other suitable examples of strong bases include quarternary ammonium groups such as trialkyl ammonium chloride, di-alkyl 2-hydroxyethyl ammonium chloride, di-alkyl 2-hydroxyethyl ammonium hydroxide.

Resins containing such groups include the Dowex™ range, including ???: the Siemens range including USF-A-464 MEG (OH) and the Rohm & Haas range including Ambersep™ 900 OH

Weak bases are those that are only partially dissociated

$$-NR_2 + H_2O \leftrightarrow -NR_2H^+ + OH^-$$

and where the equilibrium is to the left.

Resins containing such groups are known as weak base anion exchange resins.

Suitable examples of weak bases include amino groups, ammonium hydroxide.

Resins containing such groups include the Dowex™ range such as Dowex™ 65, 66, 550; Purolite™; Remco™; the Siemens range including USF-A-444 (FB) and the Rohm & Haas range including Amberlite™ IRA67RF.

Some anion exchange resins may contain small amounts of low molecular weight, possibly, water soluble material. Whilst this may not interfere in any material way with the particle formation, it is nevertheless advisable to optionally, wash the resin prior to use. Water or an alkaline solutions are preferred.

In practice, the weak base anion exchange resins may, by virtue of the poor dissociation of the anionic group, simply sorb the dissolved anion loosely within the pores of the anion exchange resin rather than undergo true anion exchange. In any case, the acid generated from the reduction of the metal salt is effectively removed from the reaction mixture. This has the effect of raising the pH.

Preferably the pH of the reacting mixture is maintained at pH from 3 to 10 more preferably from 3 to 9, even more preferably from 4 to 9, yet more preferably from 4 to 8, still more preferably from 4 to 7 and most preferably from 5 to 7. Not only is the reaction rate higher in these ranges but the metal particles formed tend to be smaller and the dispersions containing them more stable.

The pH of the final silver dispersion following removal of the anion exchange resin is preferably from 3 to 10, more preferably from 3 to 9, even more preferably from 4 to 9, yet more preferably from 4 to 8, still more preferably from 4 to 7 and most preferably from 5 to 7.

The term anion exchange as used in this specification is intended to cover both true anion exchange and also this form of sorption, that is absorption and/or adsorption.

Preferably, the amount of anion exchange resin used in the invention contains a sufficient quantity of negatively charged counter-ions, preferably hydroxide ions, so as to exchange with all of the acid generated in the reaction mixture. This amount of anion exchange resin is defined herein as the acid equivalent amount. More preferably, the amount of anion exchange resin used is from 1 to 2 times the acid equivalent amount, still more preferably from 1 to 1.5 that amount and most preferably from 1 to 1.2 times that amount.

Once ion-exchange is complete, the porous polymer beads may be isolated from the reaction mixture and regenerated, that is returned to their original form, usually by treatment with base. This enables them to be re-used

reducing still further the environmental impact of the process.

Weak base anion exchange resins are preferred because they are easily and quickly regenerated, in accordance with the manufacturer's instructions.

The ion exchange resin may be present in the aqueous mixture during the reaction or added after reaction is complete.

Preferably, the ion exchange resin is present throughout the reaction as this ensures that the reaction proceeds at a reasonable rate. In any event, it is more convenient to charge the resin with the other ingredients.

Alternatively, the reacting mixture may be passed over a fixed bed of resin either occasionally or continuously during the reaction.

The first time the resin is used in the reaction may result in a reduced yield of metal. Surprisingly, however, following regeneration of the resin and re-use in subsequent reactions, the yield of metal is substantially in accordance with the stoichiometry of the reaction, as shown for example, in Equations 1 and 2 below.

Of course, the acid formed in step iii) of the process could be neutralised by addition of base to keep the pH within the preferred range. However, this would require continuous addition of base throughout the reaction to avoid large fluctuation in pH. In addition, the salt formed on neutralising the acid would preferably need to be removed as a later step adding complexity and cost to the process.

The at least one metal salt is, preferably at least partially soluble in the aqueous carrier liquid, more preferably it is soluble at concentrations of from 0.01 moles $1^{-1}$ to 4 moles $1^{-1}$, even more preferably from 0.1 to 3 moles $1^{-1}$, yet more preferably from 0.25 to 3 moles $1^{-1}$, still more preferably from 0.25 to 2 moles $1^{-1}$. Most preferably the metal salt is completely soluble in the aqueous phase at the concentration used in the mixture as this tends to produce smaller particles.

Suitable metal salts useful in this invention include salts of copper, gold, cobalt, silver, nickel, platinum, palladium and tin including metal carboxylates, for example the acetates, lactates, benzoates, nitrates, carbonates, phosphates and mixtures thereof.

Most preferred are silver salts.

Suitable examples of silver salts for use in the invention include silver acetate, silver trifluoro acetate, silver lactate, silver benzoate, silver nitrate, silver carbonate, silver perchlorate, silver phosphate and mixtures thereof. Most preferred is silver nitrate as it is readily available and soluble in water.

The at least one metal salt may consist of a single salt or a mixture of salts being the same or different metals. When the metals are different, particles of metal alloys may be formed. For simplicity, the term 'metal particles(s)' used in the specification is intended to include metal alloys as well as single metals.

Suitable examples of reducing agents include hydrazine and its derivatives, including carbohydrazide; dialkyl hydroxyl amines such as diethyl hydroxylamine, dialkyl ketoximes such as methylethyl ketoxime and sodium borohydride. Preferably, ionic reducing agents, such as sodium borohydride are avoided as they produce ionic by-products which must be removed when the metal dispersions are used in certain applications.

It is preferable to use a reducing agent that itself produces only gaseous by-products other than water during the reaction as this obviates the need for an additional scrubbing step to remove by-products.

Hydrazine itself is such a reducing agent producing only nitrogen as the by-product. For example, the reduction of silver nitrate produces nitrogen as shown in Equation 1 below viz

$$4AgNO_3 + N_2H_4 \rightarrow 4Ag + 4HNO_3 + N_2 \qquad \text{Equation 1}$$

Unfortunately, hydrazine is toxic and thus must be handled with care. Furthermore, it forms highly explosive mixtures with certain materials including nitric acid.

Nitric acid is formed when a metal nitrate, for example silver nitrate, is reduced, as shown in Equation 1. The use of the anion exchange resin significantly reduces the risk of explosion because it effectively removes the acid from the mixture.

Most preferred of the hydrazine derived reducing agents is carbohydrazide, a non-toxic solid material that is cheap and readily available in commercial quantities. Carbohydrazide reacts with water to generate hydrazine and carbon dioxide viz

$$NH_2\,NH\,CO\,NH\,NH_2 + H_2O \rightarrow 2N_2H_4 + CO_2 \qquad \text{Equation 2}$$

Consequently, when carbohydrazide is used as the reducing agent the only by-products produced in making

the metal particles, other than the acid, are carbon dioxide and nitrogen.

Whilst the dialkyl hydroxylamines and the dialkyl ketoxime are effective reducing agents they are less preferred than the carbohydrazide. This is because they produce volatile liquids (carboxylic acids and ketones respectively) rather than gaseous by-products. Nevertheless, although not as convenient, such volatile organic compounds are easily removed. Thus, this group of reducing agents is also useful in this invention.

By aqueous is meant that at least 50% by weight of the carrier liquid is water, the remainder being an organic liquid. Preferably the carrier liquid contains from 50 to 100% water, more preferably from 75 to 100%, even more preferably from 90 to 100% water and most preferably the carrier liquid is water.

Where an organic liquid is used it is preferably compatible with the water at the concentration used. By compatible is meant that there is no phase separation of the liquids. This provides a simple process as complicated mixing and stirring regimes are unnecessary and complex separation techniques are avoided.

The reaction may be carried out at any temperature above the freezing point of the aqueous carrier liquid and below the sintering temperature of the particles formed. Preferably, the reaction temperature is from 10 to 90°C, more preferably from 20 to 70°C and even more preferably from 20 to 30°C.

In another aspect of the invention there is provided an aqueous dispersion of metal particles of mean diameter from 0.5 to 25 nm by weight made by the process hereinbefore described. Preferably the particles have a mean diameter of from 1-15 nm, more preferably from 1 to 10 nm and most preferably from 2.5 to 10 nm.

Narrow particle size distributions are preferred as there will always be fewer larger particles for a given mean particle size thereby reducing the effective sintering temperature.

The role of the stabiliser is twofold; firstly during particle formation it must have sufficient affinity to bind to the surface of the newly formed particle and prevent further crystal growth and/or accretion, thus allowing some control of the size of the particles: secondly, once the reaction is complete and the particles are formed, it prevents further particle aggregation and/or sedimentation.

Stabilisers for use in aqueous carrier liquids comprise a first portion having a greater affinity for the dispersed phase, in this case the metal surface, than the aqueous carrier liquid (such a portion is also referred to as an anchor group) and a second portion having a greater affinity for the aqueous carrier liquid than the metal surface. This results in the particle surface being at least partly covered by the stabiliser. In this way, either by charge repulsion or through steric interactions, the metal particles are prevented from coming into contact with each other and thereby flocculating.

The anchor groups are selected for their affinity to the surface of the metal particle. Groups that bind sufficiently to the metal surface include ionic groups such as phosphate ($-PO_4^{3-}$), carboxylate ($-CO_2^{-}$) and phosphonate. Most preferred are carboxylate groups.

Non-ionic groups can also bind sufficiently and suitable such groups include amine ($-NH_2$), thiol (-SH) and carboxyl ($-CO_2H$).

Carboxylate and phosphonate groups are preferred.

In the case of carboxylate groups, having the groups arranged as adjacent pairs, for example as provided by maleic anhydride, is also advantageous in providing stable dispersions of small particles.

The second stabiliser portion comprises hydrophilic polymers. Suitable such polymeric portions include polyethylene glycol, polyvinyl alcohol, acrylic polymers rich in acrylic acid and/or methacrylic acid. Polyethylene glycol containing polymers are preferred as these produce the best properties when formulated into an ink.

When the stabiliser comprises an acid rich acrylic polymer it is preferred to at least partially neutralise the dispersant. This increases the solubility of the second portion in the aqueous carrier liquid.

Suitable stabilisers include polymeric dispersants such as block copolymers, random copolymers or comb-graft copolymers. Most preferred are comb-graft copolymers.

Preferably, the amount of stabilizer is from 5 to 35%, more preferably from 15 to 25%, calculated on a weight basis on the metal.

Comb-graft copolymers are preferred as stabilisers because they produce the smallest particles and most stable dispersions.

Comb-graft copolymers are a type of branched polymer. They have a polymer backbone with pendant side-chains with the backbone and the side-chains being different in some way. This may be because the monomer composition of the backbone is different to the side-chain or that the relative amounts of the monomers are different. In the case of a stabilising material, the major difference in the backbone and side-chain is the choice of functional groups.

Preferred comb-graft copolymers for use as stabilisers in this invention are derived from monomers comprising maleic anhydride and polyethylene glycol methacrylate.

Particularly useful comb-graft copolymers for use as stabilisers are maleic anhydride-polyethylene glycol methacrylate polymers of the structure I, shown in its acid form below:

I

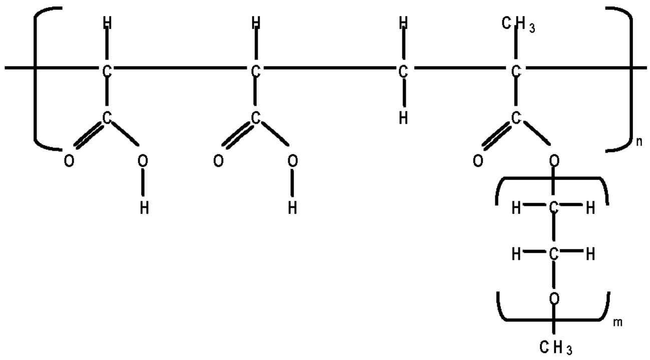

Preferably n is from 2 to 100, more preferably from 5 to 100, even more preferably from 10 to 80, still more preferably from 15 to 70 and yet more preferably from 20 to 60; m is preferably from 7 to 50, more preferably from 7 to 25 and yet more preferably from 7 to 20. Most preferred of all is the structure I where n is from 28 to 32 and m is 10 or 11.

Of course, the structure represented above is an idealised one. It is understood by the person skilled in the art that a statistical distribution of structures results from the polymerisation of such monomers.

One of the carboxyl groups in the backbone of the structure shown in I may be reacted with other molecules comprising groups reactive with carboxyls whilst still producing particles of mean particle size from 0.5 to 25 nm. Such reactive groups include amines and hydroxyls. Suitable amines include the following primary amines: β-alanine, cysteamine, diamino hexane, lysine, propylamine and ethanolamine.

Structure II illustrates the reaction product of a maleic anhydride PEG methacrylate comb graft copolymer reacted with β-alanine.

II

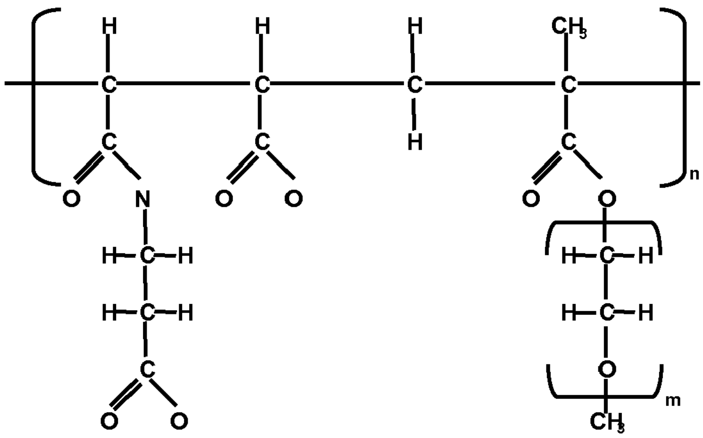

The reaction product of structure I with cysteamine is particularly effective at producing particles of mean particle size down to 1 to 3 nm, especially when m is from 10 to 12 and n is from 28 to 32.

Preferably, the acid value of the comb-graft polymer stabiliser is from 40 to 250mg KOH/gram of nv stabiliser, more preferably from 90 to 230, even more preferably from 120 to 220, yet more preferably from 150 to 200, still more preferably from 160 to 190 and most preferably from 170 to 190mg KOH/g of nv stabiliser.

Preferably, the stabilisers are not volatilised by exposure to temperatures at or around the sintering temperatures

of the particles.

The viscosity of the dispersion increases as its non-volatile content increases and this can make separating the anion exchange resin from the dispersion at the end of the reaction difficult. It is preferable, therefore, to keep the non-volatile content during manufacture, especially on the production scale, to below 15wt%, more preferably below 12wt%.

The particles produced by the method of the invention are substantially spherical.

In some circumstances it is desirable to have the metal particles in the form of a dried powder. In such cases the particles may be isolated from the aqueous mixture by, for example, filtration, spray drying and/or freeze drying provided the temperature of the particles is not allowed to rise above the sintering temperature for the particles. Preferably, the particles can be redispersed by stirring into an aqueous carrier liquid.

Of course, on drying at temperatures above the sintering temperature of the particles, the forces are such that the particles come together and touch and/or adhere to form a conducting pathway.

In another aspect of the invention there is provided an inorganic acid-free aqueous dispersion of metal particles produced by the method including the steps of

i) providing a mixture comprising at least one metal salt, aqueous carrier liquid and a stabilizer for the particles
ii) contacting the mixture with a reducing agent to form a reaction mixture
iii) causing the at least one metal salt to react with the reducing agent to form a dispersion comprising metal particles and acid
iv) separating the anion exchange resin from the dispersion of metal particles once the reaction is complete

wherein step iii) is partly or completely performed in the presence of anion exchange resin whereby the acid is exchanged for a hydroxide ion from the resin and/or is sorbed by the resin.

In another aspect of the invention there is provided an ink formulation comprising any one of the dispersions as hereinbefore described, the ink formulation being suitable to form conductive traces or circuits.

Preferably, the ink formulation also comprise ingredients selected from the group consisting of water soluble organic alcohols and surfactants.

Suitable examples of the alcohols include ethanol, isopropanol and glycols.

The ink may be applied to a substrate using known techniques including ink jet, gravure coating, flexographic, offset lithographic, screen and stencil printing.

In yet another aspect of the invention there is provided a substrate, preferably a polymer substrate, with an electrically conducting pathway derived from an ink as hereinbefore described.

In a still further aspect of the invention the metal is a metal other than silver.

The compositions were characterised according to the following methods

Particle Size Analysis

The spinning disc centrifuge technique was used to measure the particle size distribution of the dispersions. The principle of the method is based on the size dependence of the rate of sedimentation of particles when a centrifugal force is applied (Stoke's law). In general smaller particles take longer. The rate at which particles arrive at the outside of the rotating disc is measured by a Light Emitting Diode and this information is then converted to a size distribution. This technique is well suited to silver particles due to their yellow colour (Plasmon band) and high density relative to the fluid in which they are suspended (water).

In order to make the measurement the concentrated silver sample is diluted so as to obtain a pale yellow dispersion. For a 5% w/w silver dispersion this would require a dilution factor of approximately 1:1000. The exact ratio is not important as the volume of silver is not a factor in the calculation. Dilution is necessary to be able to detect a difference in absorption, a concentrated silver dispersion would completely absorb the light from the LED.

A CPS disc centrifuge model DC24000 was used to make the measurements (supplied by Analytik Ltd. Unit 4, The Acorn Centre, Chestnut Avenue, Biggleswade, Bedfordshire, United Kingdom SG18 0RA or direct from CPS Instruments Inc, 7349 SE Seagate Lane, Stuart, Florida, 34997, USA). The sample was injected into the instrument and the disc spun at 24,000 rpm. It takes approximately 1 hour to sediment the smallest particles (2-3 nm). A size distribution is calculated from the sedimentation rate taking 10.5g $cm^{-3}$ to be the density of silver. The real and imaginary parts of the complex refractive index for silver at the wavelength of the LED (405 nm) are also required and were obtained from the literature and are 0.173 and 1.95 respectively. From the distribution a mean particle diameter by weight is calculated.

## Examples

Ingredients used in the examples

Maleic anhydride and Polyethylene glycol methacrylate 475 are available from Sigma Aldrich of The old Brickyard, New Road, Gillingham, Dorset, SP8 4XT.
Dowex 66™ is a weak base (t-amine) anion exchange resin and Dowex™ Marathon a strong base (quarternary amine) anion exchange resin are both available from Dow Corporation, 3050 Spruce Street, St. Louis, Missouri, 63103 USA.

Vazo 67 is available from DuPont

**Stabiliser Examples**

**Stabiliser 1**

The stabiliser was prepared using the ingredients listed below in accordance with the following method.
To a 1 litre flask fitted with a stirrer, nitrogen purge, thermometer and reflux condenser was added MEK (4), maleic anhydride (2) and PEG methacrylate 475 (1) and the temperature raised to achieve reflux at about 85°C.
The mixture was purged with nitrogen gas throughout at a rate of 200 $cm^3$ per minute. After an initial purge of 10 minutes the benzoyl peroxide (3) was added and the mixture maintained under reflux for 1.5 hours for polymerisation to complete. The resultant stabiliser solution was cooled to 20 - 25°C and added to diethyl ether (5) whilst stirring. On addition the stabiliser precipitated and was filtered and washed with more diethyl ether after which any remaining diethyl ether was removed by drying in an oven.

| | g | mMoles |
|---|---|---|
| 1. PEG methacrylate 475 | 31.41 | 66.1 |
| 2. Maleic anhydride | 9.00 | 91.8 |
| 3. Benzoyl peroxide | 7.65 | 22.1 |
| 4. MEK | 128.18 | |
| 5. Diethyl ether | 700.00 | |

An 18 wt% stabiliser solution was made by dissolving 2.2g of the stabiliser in 10g of water and adjusting the pH to 7 using sodium hydroxide solution.

**Stabiliser 2**

This is a cysteamine adduct of a PEG acrylate-maleic anhydride comb copolymer.
The following ingredients were used

Stage 1

| | g | mMoles |
|---|---|---|
| 1. PEG acrylate 454 | 129.0 | 264.0 |
| 2. Maleic anhydride | 36.0 | 367.0 |
| 3. Vazo 68* | 24.6 | 88.0 |
| 4. Acetone | 60.0 | |
| 5. Toluene | 247.0 | |
| 6. N,N-dimethyl formamide | 25.0 | |

* 4,4'-azobis(4-cyanovaleric acid)

The same method and equipment was used as in Stabiliser 1.
The resulting solution of stage 1 copolymer was poured into 1.2 L of diethyl ether. The copolymer was allowed to settle, the cloudy ether layer poured off and the copolymer washed with three 40-50 mL lots of ether. After residual

ether was removed by evaporation the yield of red waxy copolymer was 127 g.

One gram of copolymer was dissolved in 10 ml of aqueous 1 molar potassium chloride solution and titrated with 0.1 molar potassium hydroxide solution. The acid capacity was found to be 3.2 mol/kg = AV of 179.5mg KOH/g polymer.

Stage 2

| | g |
|---|---|
| 1. Copolymer (from stage 1) | 15.00 |
| 2. Ethanol | 15.00 |
| 3. Cysteamine hydrochloride | 2.74 |
| 4. Triethylamine | 2.44 |
| 5. Ethanol | 15.00 |

A solution of cysteamine was made by dissolving cysteamine hydrochloride (3) in ethanol (5) and triethylamine (4). Dried copolymer (1) from Stage 1 was separately dissolved in ethanol (2) then quickly stirred into the cysteamine solution. After 2 hours the copolymer was precipitated in 200 mL of diethyl ether and washed twice with 20 mL portions of ether. The crude product was redissolved in ethanol and again precipitated and washed with ether. After evaporation of residual ether the infrared spectrum of the purified product showed absorption near 1565 $cm^{-1}$, attributable to the expected substituted amide link.

## Metal Particle Dispersions

### Dispersion 1

A dispersion of silver particles was made using the ingredients listed below and in accordance with the following method.

To a 250 $cm^3$ beaker was added 70g of water (1) and 16.60g (100 mmoles) of silver nitrate (2) and 12.2g of an 18wt% aqueous solution of Stabiliser 1 (3), whilst stirring. To this was added over the course of 2 hours 11.16g (12.5 mmoles) of the carbohydrazide solution (4) whilst continuing to stir. When all of the reducing agent had been added 40g (1.1 acid equivalent weight of nitric acid) of the ion exchange resin (5) was added and the stirring continued for a further 14 hours to complete the reaction, as confirmed by UV/Visible spectroscopy.

| | g |
|---|---|
| 1. Water | 70.00 |
| 2. Silver nitrate | 16.60 |
| 3. Stabiliser 1 solution (18%ww in water) | 12.20 |
| 4. Carbohydrazide soln (10.4 wt% in water) | 11.16 |
| 5. Dowex 66 | 40.00 |

The ion exchange resin is separated from the dispersion of silver particles by filtering through a 100 mesh sieve which can be aided by applying reduced pressure. The resin is washed with 2x 25 $cm^3$ portions of distilled water to remove any silver particles attached.

The particle size of the silver dispersion was determined by Disc Centrifuge as 4 to 10nm with 6nm being typical. The dispersion is storage stable, showing no signs of agglomeration and sedimentation for at least 4 months at room temperature.

nv = 10.57%

pH =7

mean diameter = 6nm

### Dispersion 2

Example 1D was repeated except that the anion exchange resin, Dowex 66, was omitted from the recipe. The reaction was very slow and the silver precipitated to form, first a silver mirror on the inner surface of the reaction vessel which on standing formed a flocculated non-redispersible mass.

## Claims

1. A method of preparing an aqueous dispersion comprising metal particles of mean diameter from 0.5 -25 nm by weight and an aqueous carrier liquid, including the steps of

   i) providing a mixture comprising at least one metal salt, aqueous carrier liquid and a stabilizer for the particles
   ii) contacting the mixture with a reducing agent to form a reaction mixture
   iii) causing the at least one metal salt to react with the reducing agent and form metal particles and acid

   wherein step iii) is partly or completely performed in the presence of anion exchange resin whereby the acid is exchanged for a hydroxide ion from the resin and/or the acid is sorbed by the resin.

2. A method according to claim 1 wherein the amount of anion exchange resin is at least the acid equivalent amount.

3. A method according to claim 1 or claim 2 wherein the metal is selected from the group consisting of silver, gold, copper, platinum, palladium.

4. A method according to claim 3 wherein the metal is silver.

5. A method according to any one of the preceding claims wherein the carrier liquid comprises less than 50% by weight of water compatible liquid.

6. A method according to any one of the preceding claims wherein the metal salt is at least partly soluble in the aqueous carrier liquid.

7. A method according to claim 6 wherein the metal salt is completely soluble in the aqueous carrier liquid used.

8. A method according to any one of the preceding claims wherein the metal salt is silver nitrate.

9. A method according to any one of the preceding claims wherein the reducing agent is selected to produce only gaseous by-products and/or water.

10. A method according to any one of the preceding claims wherein the reducing agent is selected from the list consisting of hydrazine and carbohydrazide.

11. A method according to any claim 10 wherein the reducing agent is carbohydrazide.

12. A method according to any one of the preceding claims wherein the anion exchange resin is a weak base resin.

13. A method according to any one of the preceding claims wherein the stabiliser is a comb graft copolymer.

14. A method according to claim 13 wherein the stabiliser comprises

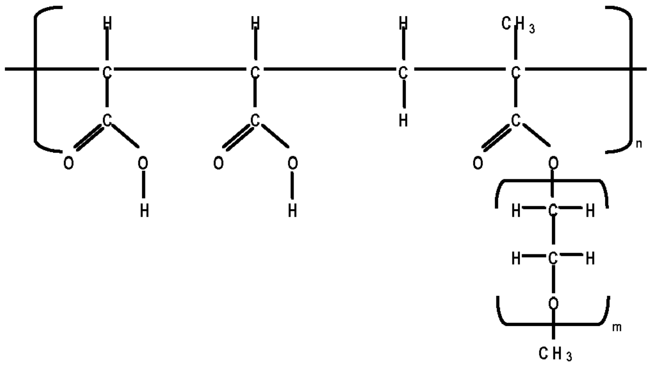

where m is from 7 to 50 and n is from 2 to 100.

**15.** A method according to claim 14 wherein m is 10 or 11 and n is 28 to 32.

**16.** A method according to any one of the preceding claims wherein the particles are separated from the aqueous carrier liquid and optionally dried.

**17.** An aqueous dispersion of metal particles made according to the method of any one of the previous claims.

**18.** An acid-free aqueous dispersion of metal particles produced by the method including the steps of

i) providing a mixture comprising at least one metal salt, aqueous carrier liquid and a stabiliser for the particles
ii) contacting the mixture with a reducing agent to form a reaction mixture
iii) causing the at least one metal salt to react with the reducing agent to form a dispersion comprising metal particles and acid
iv) separating the anion exchange resin from the dispersion once the reaction is complete

wherein step iii) is partly or completely performed in the presence of anion exchange resin whereby the acid is exchanged for hydroxide ion from the resin and/or is sorbed by the resin.

**19.** An ink composition comprising the aqueous dispersion according to any one of the preceding claims.

**20.** A substrate printed with the ink according to claim 19.

Europäisches Patentamt
European Patent Office
Office européen des brevets

# EUROPEAN SEARCH REPORT

Application Number
EP 08 17 1747

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2006/264518 A1 (KATO KENJI [JP] ET AL) 23 November 2006 (2006-11-23)<br>* paragraphs [0040], [0044], [0050], [0055], [0088] * | 17-20<br>1-16 | INV.<br>B22F1/00<br>B22F9/00 |
| Y | US 2008/064767 A1 (CHOU KAN-SEN [TW] ET AL) 13 March 2008 (2008-03-13)<br>*conclusion* | 1-16 | |
| X | US 4 425 261 A (STENIUS PER [SE] ET AL) 10 January 1984 (1984-01-10)<br>* claims 1-10 * | 17-20 | |
| X | US 2007/003603 A1 (KARANDIKAR BHALCHANDRA M [US] ET AL) 4 January 2007 (2007-01-04)<br>* claims 1-20 * | 17-20 | |
| D,A | EP 1 646 095 A (XEROX CORP [US]) 12 April 2006 (2006-04-12)<br>* claims 1-10 * | 1-20 | |
| D,A | WO 2007/120756 A (NANOMAS TECHNOLOGIES INC [US]; YANG ZHIHAO [US]; WANG HAO [US]; XU ZHI) 25 October 2007 (2007-10-25)<br>* claims 1-22 * | 1-20 | TECHNICAL FIELDS SEARCHED (IPC)<br>B22F |

The present search report has been drawn up for all claims

| Place of search | Date of completion of the search | Examiner |
|---|---|---|
| Munich | 22 June 2009 | Badcock, Gordon |

3

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 08 17 1747

This annex lists the patent family members relating to the patent documents cited in the above-mentioned European search report.
The members are as contained in the European Patent Office EDP file on
The European Patent Office is in no way liable for these particulars which are merely given for the purpose of information.

22-06-2009

| Patent document cited in search report | Publication date | Patent family member(s) | Publication date |
|---|---|---|---|
| US 2006264518 A1 | 23-11-2006 | CN 1780707 A | 31-05-2006 |
| | | WO 2004096470 A1 | 11-11-2004 |
| US 2008064767 A1 | 13-03-2008 | NONE | |
| US 4425261 A | 10-01-1984 | DE 3161354 D1 | 15-12-1983 |
| | | DK 514181 A | 19-11-1981 |
| | | EP 0055257 A1 | 07-07-1982 |
| | | FI 821138 A | 01-04-1982 |
| | | JP 2051666 B | 08-11-1990 |
| | | JP 57500324 T | 25-02-1982 |
| | | NO 813957 A | 20-11-1981 |
| | | WO 8102688 A1 | 01-10-1981 |
| US 2007003603 A1 | 04-01-2007 | NONE | |
| EP 1646095 A | 12-04-2006 | CA 2521686 A1 | 05-04-2006 |
| | | JP 2006104576 A | 20-04-2006 |
| | | US 2007099357 A1 | 03-05-2007 |
| | | US 2008000382 A1 | 03-01-2008 |
| | | US 2006073667 A1 | 06-04-2006 |
| WO 2007120756 A | 25-10-2007 | CA 2649513 A1 | 25-10-2007 |
| | | EP 2012952 A2 | 14-01-2009 |
| | | KR 20090019781 A | 25-02-2009 |
| | | US 2008124268 A1 | 29-05-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2007120756 A
- EP 1646095 A